# EUROPÄISCHE PATENTSCHRIFT

(11) **EP 1 656 824 B1**
(45) Veröffentlichungstag und Bekanntmachung des Hinweises auf die Patenterteilung: **16.04.2008**
(21) Anmeldenummer: 05024503.4
(22) Anmeldetag: 10.11.2005
(51) Int. Cl.: A01D 34/69, F16H 9/04

(54) **Antrieb für ein fahrbares Gartengerät**
Drive for a drivable gardening device
Commande pour un dispositif pour jardin

(30) Priorität: 10.11.2004 EP 04026659
(43) Veröffentlichungstag der Anmeldung: 17.05.2006
(60) Teilanmeldung: 08003157.8
(73) Patentinhaber: Viking GmbH, 6336 Langkampfen (AT)
(72) Erfinder: Huber, Reinhold, 6111 Volders (AT)
(74) Vertreter: Wasmuth, Rolf

(56) Entgegenhaltungen:
- DE-A1- 2 950 459
- GB-A- 825 933
- GB-A- 1 216 293

## Beschreibung

Die Erfindung betrifft einen Antrieb für eine Arbeitsmaschine, insbesondere ein Gartengerät wie einen über Räder fahrbaren Rasenmäher o. dgl., der im Oberbegriff des Patentanspruchs 1 angegebenen Gattung.

Ein Gartengerät wie ein Rasenmäher umfasst ein Messerblatt, welches an einer Unterseite des Gehäuses angeordnet ist und über die zu bearbeitende Bodenfläche bewegt wird, wobei es von einem Motor des Gartengerätes rotierend angetrieben wird. Der Motor kann gleichzeitig für den Radantrieb des Gartengerätes genutzt werden, indem die Antriebswelle des Werkzeuges auf die Räder des Gartengerätes gekuppelt wird.

Die DE 29 50 459 A1 beschreibt einen Antrieb für einen Rasenmäher, bei dem die Antriebswelle des Schneidwerkzeugs über ein Riemengetriebe auf die Räder des Mähers einwirkt. Zur stufenlosen Einstellung der Fahrtgeschwindigkeit des Mähers sieht der bekannte Antrieb eine auf die Räderwelle wirkende Riemenscheibe mit variabel einstellbarem Durchmesser vor. Beim Betrieb eines fahrbaren Rasenmähers ist es oft erforderlich, den Rasenmäher rückwärts zu bewegen. Eine Unterstützung der Rückwärtsbewegung des Rasenmähers ist bei dem bekannten Riementrieb für die Räder des Rasenmähers nicht möglich.

Die DE 37 15 336 A1 offenbart ein Riemengetriebe für eine landwirtschaftliche Maschine, welches eine bedarfsweise Umkehr der Abtriebsdrehrichtung vorsieht, um bei einem selbstladenden Erntewagen ein Rücklaufen des Querförderbandes am rückwärtigen Wagenende zu ermöglichen. Dabei sind zwei Riemengetriebe vorgesehen mit einer Getriebeeingangswelle und einer Getriebeausgangswelle sowie einem Zwischengetriebe und einer Einrichtung, welche jeweils einen der beiden Riementriebe auf das Antriebsrad schaltet. Die beiden alternativ einschaltbaren Abtriebsriemen laufen auf Riemenrädern um, deren Wellen auf ei ner Wippe gelagert sind, wobei die Wippenachse zwischen den Wellen angeordnet ist und das Verschwenken der Wippe in zwei Schwenklagen gestattet, in denen jeweils einer der Riementriebe gespannt und der andere entspannt ist.

Die GB 1216293 A offenbart einen Riementrieb mit zwei verschiedenen Riemen, denen jeweils eine eigene Antriebsscheibe zugeordnet ist. Eine Umschaltung erfolgt durch eine Schaltrolle, die wechselseitig einen der beiden Riemen unter Spannung setzt, wodurch die jeweilige Wirkverbindung der Antriebsscheibe mit dem jeweiligen Sekundärriemen an- bzw. abgeschaltet wird. Dadurch sind beide Riementriebe auch im schlaffen zustand im Eingriff mit den entsprechenden Antriebsscheiben. Während der eine Riementrieb unter Spannung steht, rutscht der jeweils andere Riementrieb durch.

Der vorliegenden Erfindung liegt die Aufgabe zugrunde, einen Radantrieb für ein über Räder fahrbares Arbeitsgerät der gattungsgemäßen Art zu schaffen, welcher mit einfachen baulichen Mitteln einen bedarfsweisen Wechsel der Antriebsrichtung ermöglicht.

Diese Aufgabe wird erfindungsgemäß mit den Merkmalen des Patentanspruchs 1 gelöst.

Erfindungsgemäß ist ein mehrstufiger Fahrantrieb zwischen der Messerwelle des Gartengerätes und einer Räderwelle vorgesehen, wobei ein Sekundärtrieb auf eine an das Rad gekoppelte Abtriebsscheibe wirkt. In einem Primärantrieb werden zwei Antriebsscheiben von der Messerwelle des Motors mit unterschiedlichen Drehrichtungen angetrieben, welche alternativ auf den Sekundärtrieb geschaltet werden. Die zwei Antriebsscheiben mit unterschiedlicher Drehrichtung können permanent von der Motorwelle über einen Primärantrieb oder von einer anderen, mit dem Motor gekoppelten Welle angetrieben sein. In zweckmäßiger Bauweise erfolgt der Primärantrieb über einen Riementrieb, wobei die Antriebswelle des Motors über einen Primärriemen, der vorteilhaft als Rundriemen ausgeführt wird, die Antriebsscheiben entgegengesetzt antreibt.

In einfacher baulicher Gestaltung kann auf diese Weise der Sekundärriementrieb in beiden Drehrichtungen gedreht werden, indem der Sekundärriemen mit einer der beiden Antriebsscheiben in Wirkverbindung gebracht wird. Für die Umschaltung ist eine von der Bedienperson des Arbeitsgeräts betätigbare Schalteinrichtung vorgesehen, welche je nach Schaltstellung eine der beiden Antriebsscheiben in Wirkverbindung mit dem Sekundärriemen bringt. Vorteilhaft ist die Abtriebsscheibe im Sekundärtrieb als im Durchmesser stufenlos veränderliche Varioscheibe ausgebildet, wodurch sich verschiedene Übersetzungen entsprechend dem Scheibendurchmesser ergeben. Zur Gewährleistung der Riemenspannung ist die Varioscheibe mit mindestens einem Spannelement ausgestattet.

In einer vorteilhaften Ausgestaltung der Erfindung ist die Schalteinrichtung zum Wechsel der Antriebsdrehrichtung im Sekundärriementrieb eine Rolleneinrichtung, über die der Sekundärriemen läuft und welche relativ zu den gegensinnig laufenden Antriebsscheiben derart auslenkbar angeordnet ist, daß je nach Schaltstellung alternativ eine der beiden Antriebsscheiben in Eingriff mit dem Riementrum gebracht wird. Es sind nur geringe Bewegungswege für die Auslenkung erforderlich, wenn die Antriebsscheiben zwischen der auslenkbaren Rolleneinrichtung und der Abtriebsscheibe und jeweils benachbart eines der Riementrums des Sekundärriementriebs angeordnet sind. Dabei können sich die Antriebsscheiben in einer möglichen Gestaltung außerhalb der beiden Riementrums befinden und durch entsprechende Schwenkbewegung wird eine der beiden Antriebsscheiben einwärts gezogen und an der Außenseite des Sekundärriemens angelegt. Eine Anordnung mit geringem Bauvolumen ist gegeben, wenn die gegensinnigen Antriebsscheiben zwischen den Riementrums angeordnet sind und durch Schwenkbewegungen der Rolleneinrichtung nach außen eine der Antriebsscheiben auf den jeweils zugeordneten Riementrum wirkt.

In einer alternativen Ausgestaltung der Erfindung sind die vom Primärriemen mit unterschiedlichen Drehrichtungen angetriebenen Antriebsscheiben als in ihren Durchmessern variabel einstellbare Varioscheiben ausgebildet, über die der Sekundärriementrieb läuft. Die Schalteinrichtung für die Umschaltung der Antriebsrichtung koppelt dabei die Stellmittel für die stufenlose Veränderung der Scheibendurchmesser der Varioscheiben derart, daß zur Einwirkung einer Varioscheibe auf den Riementrum ein vergrößerter Scheibendurchmesser eingestellt wird und der Durchmesser der jeweils anderen Varioscheibe in eine Leerlaufstellung mit kleinem Durchmesser gebracht wird. In der Leerlaufstellung mit kleinem Durchmesser läuft der Sekundärriemen lastfrei durch die Varioscheibe. Allein die zweite Varioscheibe, die in entgegengesetzter Richtung umläuft, wirkt reibschlüssig mit ihrem entsprechenden Scheibendurchmesser auf den Sekundärriemen ein. Zur Umschaltung der Drehrichtung wird entsprechend die andere Varioscheibe durch Einstellung ihres Durchmessers in Reibschluß mit dem Treibriemen gebracht, während die andere Varioscheibe in die Leerlaufstellung gebracht wird und die reibschlüssige Einwirkung auf den Riemen unterbrochen wird. Bei dieser Ausgestaltung der Erfindung sind schwenkbare Scheiben nicht erforderlich, und es kann ein hoher Umschlingungswinkel und damit sicherer Reibschluß erreicht werden, wenn der Sekundärriemen über eine zwischen den Varioscheiben und der Abtriebsscheibe angeordnete Führungsrolle läuft. Auch in dieser Ausführung der Erfindung wird die Abtriebsscheibe als stufenlos veränderliche, federbelastete Varioscheibe ausgebildet, wodurch über eine entsprechende Einregelung des Durchmessers der einstellbaren Abtriebsscheibe im Sekundärtrieb neben der Fahrtgeschwindigkeit auch die erforderliche Riemenspannung im Sekundärtrieb eingestellt werden kann.

Die Varioscheiben werden vorteilhaft mit jeweils zwei in Überdeckung liegenden Scheibenbacken ausgebildet, welche axial zueinander verschieblich angeordnet sind und einen V-förmigen Zwischenraum zur Aufnahme eines Treibriemens einschließen. Durch die Scheibe läuft ein Sekundärriemen mit V-Querschnitt, wodurch eine hohe Auflage- bzw. Kontaktfläche für die reibschlüssige Kraftübertragung zwischen Scheibe und Treibriemen gegeben ist. Die alternativ zum Zweck der Umschaltung der Drehrichtung aktivierbaren Varioscheiben weisen zwischen ihren Scheibenbacken einen frei drehbar gelagerten Auflagering auf, auf dem der V-Sekundärriemen mit seinem Riemengrund in der geöffneten Stellung in der Varioscheibe aufliegt. Die Schaltvorrichtung koppelt die Stellbewegungen der Scheibenbacken derart, daß bei Einschaltung der einen Varioscheibe die jeweils andere Varioscheibe geöffnet wird und der Sekundärriemen dort antriebslos auf dem zentralen Auflagering mitläuft. Der Auflagering kann vorteilhaft durch ein Kugellager gebildet werden, dessen Außenring bei Öffnung der Varioscheibe freigelegt wird.

Bei dieser Gestaltung ist der Riemen - auch im Leerlauf - durch eine entsprechende Spannkraft gespannt gehalten, wobei die Lager im Nutgrund der Varioscheiben einen verlustarmen Lauf des gespannten Riemens gewährleisten. Beim Einkuppeln oder bei der Umschaltung der Fahrtrichtung müssen nur geringe Wege überwunden werden; Totwege sind weitgehend entfallen.

Die Umschaltung kann in einfacher Weise durch Handkraft des Benutzers erfolgen; um die erforderlichen Betätigungskräfte für eine Bedienperson zur Umschaltung der Antriebsrichtung oder zur Änderung der Fahrtgeschwindigkeit gering zu halten, kann eine Schalteinrichtung vorteilhaft sein, welche als Servounterstützung die Motorkraft zur Überwindung der Rückstellkräfte der V-Riemen heranzieht. Die erfindungsgemäße Schalteinrichtung sieht dabei zwei parallel liegende und zweckmäßig von dem Primärriementrieb in entgegengesetzten Richtungen angetriebene Wellen vor, auf denen die varioscheiben drehfest angeordnet sind, wobei eine Scheibenbacke der Varioscheibe axial verschieblich ist. Die verschiebliche Scheibenbacke der Varioscheibe stützt sich axial an einer Steuerscheibe ab, die mit Gewindeeingriff auf einem Steuergewinde der jeweiligen Welle drehbeweglich angeordnet ist. Die Steuergewinde und die Steuerscheiben der beiden Wellen haben unterschiedliche Gewinderichtungen. Dadurch können die Steuerscheiben und ihnen folgend die jeweiligen Varioscheiben je nach Drehrichtung, über ein rechts- oder linksgängiges Steuergewinde relativ zu den Antriebswellen ein- und ausgeschraubt werden. Das Einschrauben erfolgt dabei durch Abbremsen über Reibkontakt mit der drehfesten Steuerhülse, das Ausschrauben erfolgt über Reibkontakt mit dem schneller laufenden Rückstellrad. Das Steuergewinde kann dabei zweckmäßig auf den Wellenzapfen ausgebildet sein, wobei die Steuerscheibe vorteilhaft eine mit ihrem Innengewinde auf dem Gewindezapfen schraubbewegliche Mutter ist.

Dem Gewinde der drehenden Scheibenwelle folgend wirkt die Steuerscheibe auf die Nabe der beweglichen Scheibenbacke ein. Die Einwärtsbewegung der axial verschieblichen Scheibenbacke zur Vergrößerung des Scheibendurchmessers ist gegen die rückstellende Kraft des Sekundärriemens und dessen Riemenspannung aufzubringen und wird als Servosystem von der Drehbewegung der Welle unterstützt und muß nicht von der Bedienperson aufgebracht werden.

Für die servounterstützte Bewegung in entgegengesetzter Richtung ist pro Welle ein drehbar auf der Nabe der verschieblichen Scheibenbacke gelagertes Rückstellrad vorgesehen, welches mit der Steuerscheibe über axiales Spiel in reibschlüssige Verbindung bringbar ist und durch Ziehen der Steuerhülse die Steuerscheibe ausschraubt. Das Rückstellrad wird dabei von einer der Wellen mittels eines Getriebes mit erhöhter Drehzahl gegenüber der Welle angetrieben. Der Drehantrieb des schnell drehenden Rückstellrades kann durch ein Zahnradgetriebe erfolgen, wobei eine der Wellen das Rückstellrad der jeweils anderen Welle antreibt und dieses Rückstellrad seinerseits mit einer Umfangsverzahnung des frei drehbar auf der Antriebswelle gelagerten Rückstellrades kämmt. Alternativ ist ein sicherer Drehantrieb zwischen Welle und Rückstellrad durch ein Riemengetriebe möglich.

An der Steuerscheibe und an der Steuerhülse einerseits sowie auf der innenliegenden Seite der Rückstellräder sind Kontaktflächen vorgesehen, welche je nachdem, ob Zug oder Druck an der Steuerhülse vorliegt, aneinandergelegt werden und für reibschlüssige Kraftübertragung sorgen. Sowohl die Kontaktflächenpaarung der Steuerscheibe mit der Steuerhülse, als auch der Steuerscheibe mit dem Rückstellrad sind vorteilhaft konisch ausgebildet, wodurch der Bediener in Verbindung mit dem Steuergewinde nur sehr geringe Betätigungskräfte zur Verstellung der Varioscheibe aufbringen muß.

Weitere Merkmale der Erfindung ergeben sich aus den weiteren Ansprüchen, der Beschreibung und der Zeichnung, in der ein Ausführungsbeispiel der Erfindung anhand eines Gartengerätes wie eines Rasenmähers näher erläutert ist. Es zeigen:
- Fig. 1: eine schematische Ansicht eines fahrbaren Rasenmähers mit einem Riemenantrieb,
- Fig. 2: eine perspektivische Ansicht eines Riementriebs im Rasenmäher, alternativ ausgeführt mit zwischen den Antriebsscheiben liegenden Sekundärriemen,
- Fig. 3: eine perspektivische Ansicht der Rückseite des Riementriebes,
- Fig. 4 bis Fig. 6: schematische Darstellungen der Schaltstellungen des Sekundärriementriebs,
- Fig. 7 und Fig. 8: Darstellungen eines Sekundärriementriebs mit Unterstützung von Kurvenfahrten des Mähers,
- Fig. 9: eine schematische Darstellung des Sekundärriementriebes nach Fig.2 und Fig.3,
- Fig. 10: eine alternative Ausgestaltung des zweistufigen Riementriebes des Rasenmähers nach Fig. 1,
- Fig. 11: eine Schnittdarstellung einer Servo-Schalteinrichtung zur Umschaltung der Antriebsdrehrichtung des Sekundärriementriebes und zur variablen Einstellung der Riemenscheibe,
- Fig. 12: eine perspektivische Ansicht einer ServoSchalteinrichtung für eine variabel einstellbare Riemenscheibe,
- Fig. 13: eine Schnittdarstellung der Anordnung nach Fig. 12,
- Fig. 14: eine perspektivische Ansicht einer Riemenscheibe mit variabel einstellbarem Durchmesser,
- Fig. 15: eine Schnittdarstellung der Varioscheibe nach Fig. 14,
- Fig. 16: eine perspektivische Darstellung einer angetriebenen Scheibenbacke mit Kupplungsschlitzen,
- Fig. 17: eine perspektivische Darstellung einer Schalteinrichtung ohne Servounterstützung,
- Fig. 18: einen Längsschnitt durch die Schalteinrichtung nach Fig. 17.

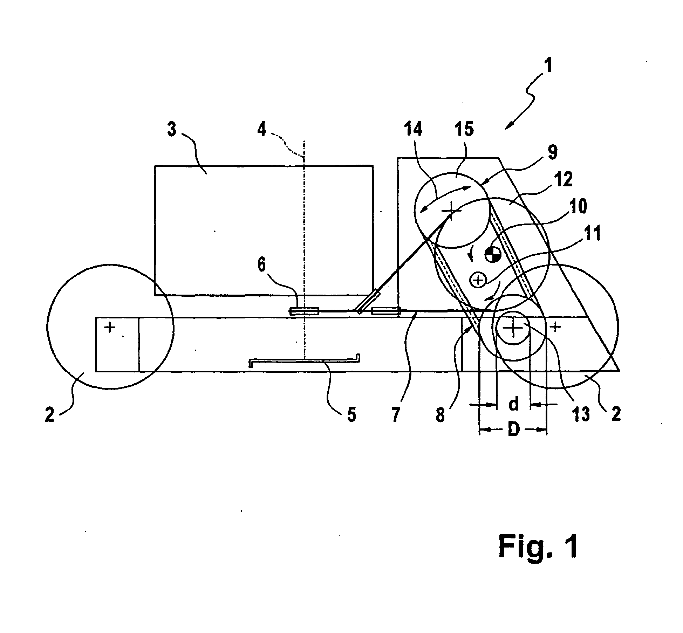

Fig. 1 zeigt in schematischer Darstellung ein Arbeitsgerät in Form eines Gartengerätes, nämlich eines Rasenmähers 1. Das Mähergehäuse des Gartengerätes bzw. Rasenmähers 1 ist mittels Rädern 2 über die zu bearbeitende Fläche zu fahren. Das Gartengerät weist mindestens ein Werkzeug in Form eines Messerblattes 5 auf, welches zu der zu bearbeitenden Bodenfläche frei liegt. Das Messerblatt 5 wird rotierend von einer Motorwelle 4 eines Antriebsmotors 3 des Gartengerätes bzw. Rasenmähers 1 angetrieben, wobei der Antriebsmotor 3 ein Elektromotor oder ein Verbrennungsmotor sein kann. Zur Fortbewegung des Rasenmähers wird mindestens eines der Räder 2 über einen Antrieb, im Ausführungsbeispiel ein Riementrieb, von der Antriebswelle 4 des Messerblattes 5 angetrieben. Als Getriebe zum Antrieb sind auch andere Getriebeausführungen einsetzbar, z.B. ein Kettentrieb, ein Kardantrieb o. dgl.. Im Ausführungsbeispiel ist ein zweistufiger Riementrieb vorgesehen, wobei ein Primärriemen 7 über eine Abtriebsscheibe 6 auf der antreibenden Messerwelle 4 läuft und eine Riemenscheibe 12 antreibt. Der Primärriemen 7 ist vorteilhaft als Rundriemen ausgestaltet. Der Primärriemen 7 treibt über die Rundriemenscheibe 12 zwei Antriebsscheiben 10, 11 in gegenläufigen Richtungen an. Diese Antriebsverbindung kann über Getriebezahnräder gebildet werden, die - im gezeigten Ausführungsbeispiel - unter der Ebene der Riemenscheiben liegen. Im gezeigten Ausführungsbeispiel ist dabei die eine der Antriebsscheiben 10 koaxial zu der Rundriemenscheibe 12 angeordnet und drehfest mit dieser verbunden. Am Umfang der ersten Antriebsscheibe 10 wälzt sich vorteilhaft über eine Verzahnung das zweite Antriebsrad 11 ab und wird in der entgegengesetzten Drehrichtung zwangsgetrieben.

Der Antrieb des Rades 2 erfolgt über einen Sekundärriementrieb 8, welcher über eine Rolleneinrichtung 9 und eine auf das Rad 2 wirkende Abtriebsscheibe 13 läuft. Die Abtriebsscheibe 13 ist als Varioscheibe 13 ausgebildet, bei der ein Scheibendurchmesser zwischen einem großen Durchmesser D und einem kleinen Durchmesser d stufenlos einstellbar ist und dadurch entsprechend dem eingestellten Durchmesser die Fahrtgeschwindigkeit des Rasenmähers 1 bestimmt. Die Varioscheibe ist mit einer Spannkraft beaufschlagt, die als Spannfeder aus Stahl oder Gummi oder auch als Gewichtskraft o. dgl. ausgeführt sein kann. Aufgrund der Spannkraft wird eine permanente Riemenspannung im Sekundärriementrieb 8 erzeugt. Die Antriebsscheiben 10, 11 sind zwischen den beiden Riementrums des Sekundärriemens 8 angeordnet. Die Rolleneinrichtung 9 ist in Pfeilrichtung 14 schwenkbeweglich, wobei entsprechend der Schaltstellung der Rolleneinrichtung 9 einer der beiden Riementrums an die jeweils benachbart liegende Antriebsscheibe angedrückt wird und der Sekundärriemen so in der Antriebsrichtung der jeweils aktivierten Antriebsscheibe 10, 11 umläuft. Die Rolleneinrichtung 9, die im vorliegenden Ausführungsbeispiel als schwenkbeweglich gelagerte Führungsscheibe 15 ausgebildet ist, ist dabei zu beiden Seiten aus einer Leerlaufstellung verschwenkbar, in der keine der permanent angetriebenen Antriebsscheiben auf den Sekundärriemen 8 einwirkt.

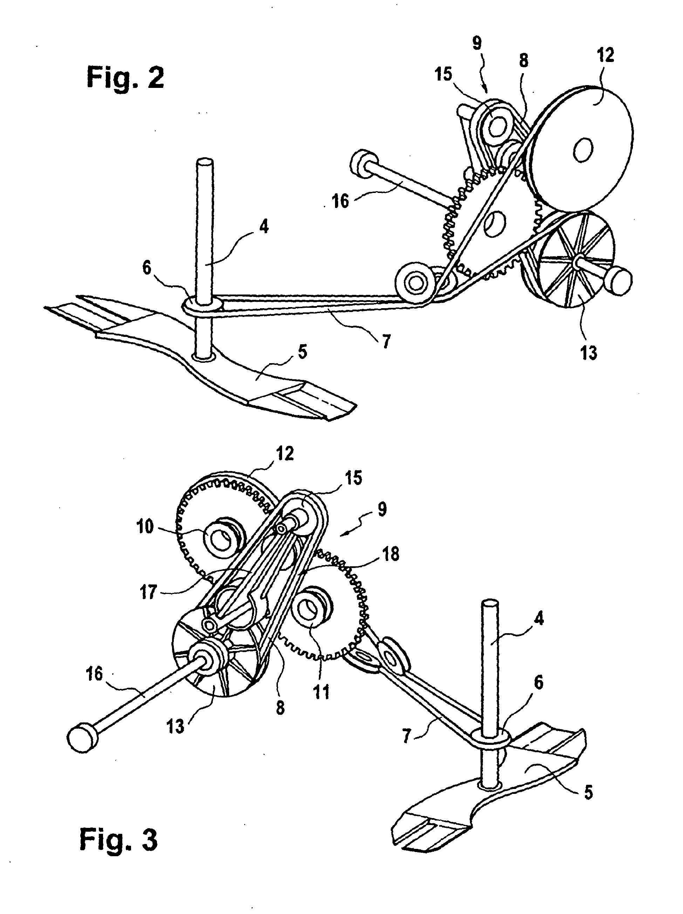

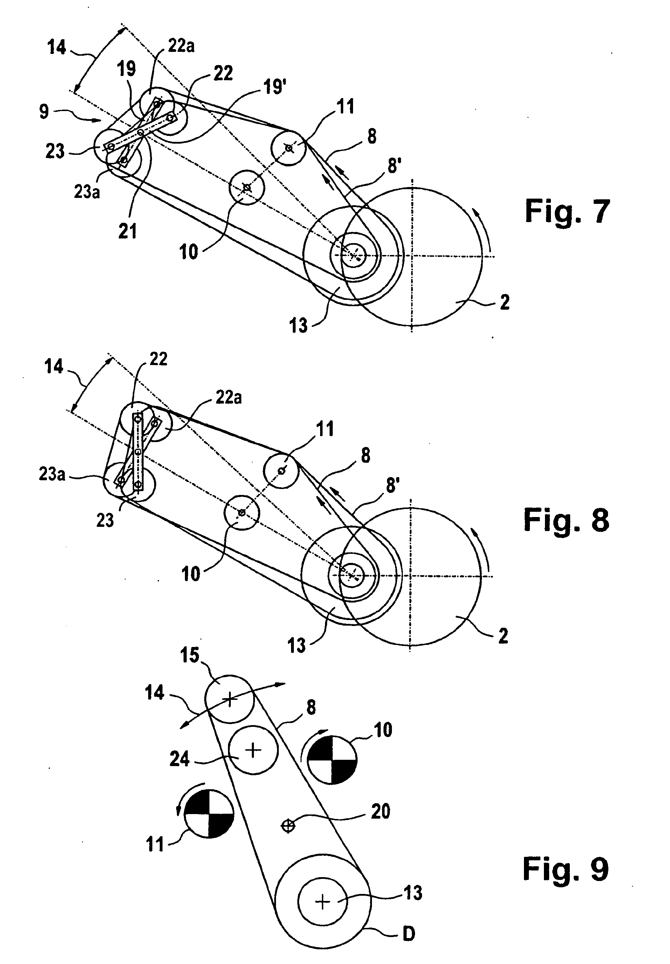

Eine perspektivische Ansicht des Riementriebes zeigen Fig. 2 und 3. Fig. 9 zeigt den Riementrieb in vereinfachter schematischer Darstellung. Für jeweils gleiche Bauteile sind dabei die gleichen Bezugszeichen verwendet wie in Fig. 1. Über den Primärriemen 7 treibt die Messerwelle 4 eine Rundriemenscheibe 12 an. Ein Sekundärriemen 8 wirkt auf eine im Durchmesser einstellbare Varioscheibe 13, welche drehfest auf der Radwelle 16 eines Antriebsrades des Rasenmähers gehalten ist. Die Rundriemenscheibe 12 weist auf ihrer dem Sekundärtrieb zugewandten Stirnseite einen verzahnten Absatz auf, welcher mit einer Verzahnung einer weiteren Rundriemenscheibe 12 kämmt und dadurch die zweite Rundriemenscheibe in entgegengesetzter Drehrichtung antreibt. Auf den Rückseiten der Rundriemenscheiben sind jeweils konzentrisch Antriebsscheiben 10, 11 ausgebildet, welche entsprechend der Drehzahl und Drehrichtung der jeweiligen Rundriemenscheibe 12 umlaufen. Im Unterschied zu der in Fig. 1 beschriebenen Anordnung ist der Sekundärriemen 8 zwischen den Antriebsrädern 10, 11 durchgeführt, wodurch die Antriebsräder 10, 11 nicht zwischen den Riementrums, sondern außerhalb des Riementrums angeordnet sind. Die Führungsrolle 15 ist an einem Schwenkarm 17 gelagert, dessen Drehpunkt zwischen der Varioscheibe 13 und der Führungsrolle 15 liegt. Zur Kraftübertragung auf die Radwelle 16 wird die schwenkbare Führungsscheibe 15 in eine Stellung gebracht, in der eine der Riemenscheiben an die Rückseite des ihr zugeordneten Riementrums 18 einwirkt. Je nachdem, ob Vorwärts- oder Rückwärtstrieb gefordert ist, wird die Rolleneinrichtung 9 betätigt und der Riementrieb durch die Schwenkstellung der Führungsscheibe alternativ an einer der beiden Antriebsscheiben 10, 11 angelegt.

Fig. 9 zeigt eine schematische Darstellung der Sekundärstufe des Riementriebs nach Fig. 2 und 3, bei der die gegensinnig vom Primärtrieb angetriebenen Antriebsscheiben 10, 11 an den Außenseiten des Sekundärriemens 8 liegen. Der Sekundärriemen läuft über eine Varioscheibe 13 als Abtrieb für das Mäherrad und über eine Führungsscheibe 15, welche in Pfeilrichtung 14 schwenkbar ist. Die Schwenkachse 20 der Schwenkbewegung in Pfeilrichtung 14 liegt vorteilhaft zwischen der Führungsscheibe 15 und der Abtriebsscheibe 13 auf einer mittigen Achse zwischen den Antriebsscheiben 10, 11. Eine Riemenführung und bessere Umschlingung der Antriebsscheiben 10, 11 wird im vorliegenden Ausführungsbeispiel durch eine Umlenkrolle 24 gewährleistet, welche festliegt und in den ausgeschwenkten Stellungen der Führungsscheibe 15 den Sekundärriemen 8 aufnimmt.

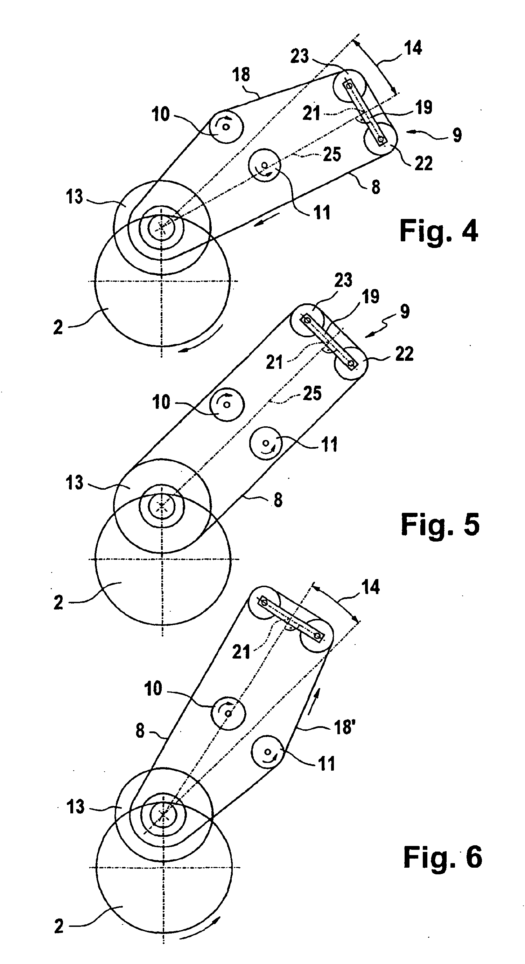

Die Fig. 4 bis 6 zeigen in schematischer Darstellung die Schaltstellungen der schaltbaren Rolleneinrichtung 9 für Rückwärtstrieb (Fig. 4), Neutralstellung (Fig. 5 - Stillstand) und Vorwärtsfahrt (Fig. 6). Die schaltbare Rolleneinrichtung 9 besteht dabei im vorliegenden Ausführungsbeispiel aus einer Wippe 19, an deren Enden jeweils Umlenkrollen 22, 23 für den Sekundärriemen 8 angeordnet sind. Der Sekundärriemen 8 läuft in bereits beschriebener Weise über die Varioscheibe 13, welche das Rad 2 des Mähers antreibt. In der Neutralstellung gemäß Fig. 5 liegt das Wippenzentrum 21 auf einer Neutralachse 25, welche mittig zwischen den Antriebsscheiben 10, 11 durchgeht. Die Länge der Wippe 19 ist dabei derart ausgestaltet, daß die Umlenkscheiben 22, 23 den Sekundärriemen weiter aufspannen als der Außenumkreis der Durchmesser der beiden Antriebsscheiben 10, 11, wodurch der Riemen 8 in der gezeigten Leerlaufstellung mit keiner der beiden Antriebsscheiben 10, 11 in Kontakt kommt. Soll der Rasenmäher in Bewegung gesetzt werden, so wird die Rolleneinrichtung 9 in Pfeilrichtung 14 aus der Neutrallage geschwenkt, wodurch eine der beiden Antriebsscheiben 10, 11 in Eingriff mit dem jeweils zugeordneten Riementrum 18, 18' gebracht wird. Fig. 4 zeigt dabei die für Rückwärtsfahrt vorgesehene Stellung der Rolleneinrichtung 9, in der durch Verschwenkung der Wippe 19 die Umlenkrollen 22, 23 den Riementrum um die Antriebsscheibe 10 ziehen und diese auf den Riementrum 18 einwirkt. In der für Vorwärtsfahrt vorgesehenen Schaltstellung gemäß Fig. 6 wird der andere Riementrum 18' durch Verschwenkung der Umlenkscheiben in Pfeilrichtung 14 an die andere Antriebsscheibe 11 angelegt und so der Sekundärriemen 8 in entgegengesetzter Richtung bewegt.

Um die Kraftübertragung zwischen den Antriebsscheiben und dem Sekundärriemen 8 zu erhöhen, kann der Sekundärriemen 8 als Zahnriemen ausgebildet werden und die Antriebsscheiben 10, 11 entsprechend mit Verzahnungen versehen werden. Auf diese Weise kann auch bei geringem Umschlingungswinkel aufgrund der formschlüssigen Kraftübertragung ein schlupfloser Antrieb erzeugt werden. Auch ist bei einer formschlüssigen Kraftübertragung eine geringere Riemenspannung erforderlich. Die Riemenspannung wird über die Einstellung des Durchmessers der Varioscheibe 13 über Federkraft bereitgestellt. Dadurch ändert sich mit zunehmendem Schwenkwinkel die Übersetzung. Der Sekundärriemen 8 wird vorteilhaft als V-Riemen ausgeführt, welcher reibschlüssig mit seinem Querschnitt an den Scheibenbacken der Varioscheibe 13 anliegt und diese antreibt. Der V-Sekundärriemen kann in der Variante mit verzahnten Antriebsscheiben 10 als V-Zahnriemen ausgebildet werden.

Fig. 7 und 8 zeigen eine Ausführung des erfindungsgemäßen Sekundärtriebes, welcher eine Unterstützung einer Kurvenfahrt des Rasenmähers ermöglicht. Dabei sind die gegenüberliegenden Räder des Mähers auf getrennten Achsen angeordnet und mit unterschiedlichen Drehzahlen drehbar. Die Wirkung eines Differentials kann dabei erreicht werden durch Anordnung zweier jeweils als Varioscheibe 13 ausgebildeten Abtriebsscheiben für die Räder 2 und zwei parallel angeordnete Sekundärriemen 8, 8', wobei jeder Riemen 8, 8' über Umlenkrollen 22, 22a, 23, 23a geführt ist, welche jeweils auf einer Wippe 19, 19' gelagert sind. Dabei ist eine der Wippen 19' schwenkbeweglich um einen zwischen den Rollen 22, 23 liegenden Drehpunkt 21 und die andere Wippe 19 fest angeordnet. Unabhängig von der zeichnerischen Darstellung läuft jeder Riemen über eine Rolle der fixen Wippe und über eine Rolle der beweglichen Wippe. Die Sekunddärriemen 8,8' laufen jeweils entsprechend über eine Führungsscheibe der beweglich gelagerten Wippe 19' und eine Führungsscheibe der fest angeordneten Wippe 19. In Kurvenfahrt pendelt die bewegliche Wippe aus und erreicht über ein Kräftegleichgewicht eine Differentialwirkung. Die schaltbare Rolleneinrichtung 9 hat in den gezeigten Darstellungen die Wippen 19, 19' in Schwenkrichtung 14 verschoben, wodurch die Antriebsriemen 8, 8' von der Antriebsscheibe 11 angetrieben sind und die andere Antriebsscheibe 10 leer läuft. Beide Sekundärriemen 8, 8' werden so mit der gleichen Geschwindigkeit von der Antriebsscheibe 8 angetrieben, jedoch wird die Umlaufgeschwindigkeit der Riemen 8, 8' durch unterschiedliche Durchmesserstellungen der Varioscheiben 13 in abweichende Umdrehungszahlen der angetriebenen Räder 2 umgesetzt. Der Riemen 8 treibt dabei das linke Rad des Mähers an, während der Riemen 8' auf das rechte Rad wirkt. Fig. 7 stellt die Einstellung für eine Linkskurve in Vorwärtsfahrt dar, in der der Sekundärriemen 8 über einen großen Scheibendurchmesser das linke Rad mit entsprechend geringer Drehzahl antreibt, während der Riemen 8' über einen kleinen Scheibendurchmesser läuft. In entsprechender Weise ist in Fig. 8 die Schaltstellung für eine Rechtskurve in Vorwärtsfahrt dargestellt, in der ein kleiner Durchmesser der Varioscheibe 13 für den Sekundärriemen 8 des linken Rades vorgesehen ist.

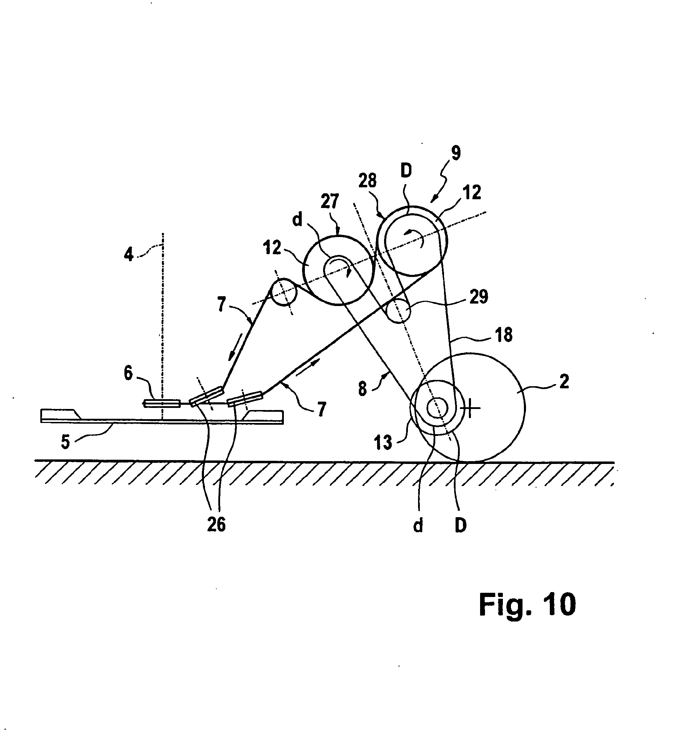

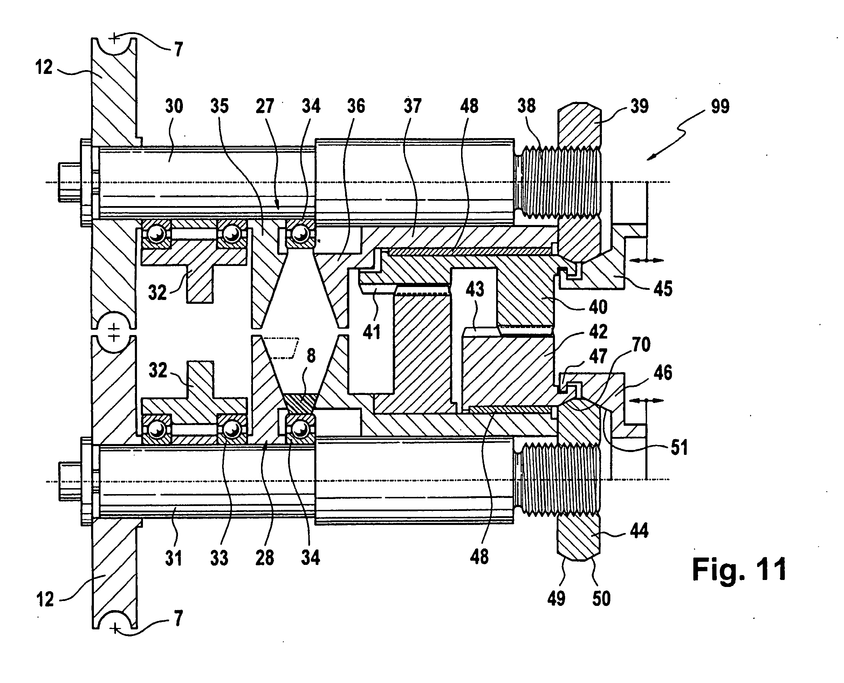

In der schematischen Darstellung der Fig. 10 ist ein zweistufiger Riementrieb zum Antrieb des Mäherrades 2 durch die Antriebswelle 4 des Motors gezeigt, welcher auf das Messerblatt 5 des Rasenmähers wirkt. Die Motorwelle 4 treibt über eine Abtriebsscheibe 6 den Primärriemen 7 an, der über Umlenkrollen 26 zu den Antriebsscheiben für den Sekundärtrieb 8 geleitet wird. Der Primärriemen 7 läuft dabei über zwei nebeneinander drehbar angeordnete Rundriemenscheiben 12, wobei der Rundriemen wechselseitig um die Rundriemenscheiben 12 geführt ist und diese dadurch in entgegengesetzten Drehrichtungen antreibt. An den Rückseiten der Rundriemenscheiben 12 sind zur Aufnahme des Sekundärriemens 8 jeweils in drehfester Verbindung mit den Scheiben 12 Varioscheiben 27, 28 mit stufenlos einstellbaren Durchmessern angeordnet. Der Antrieb des Sekundärriemens 8 erfolgt dabei jeweils alternativ durch eine der beiden Varioscheiben 27, 28, wobei die unten anhand von Fig. 11 näher beschriebene Schalteinrichtung 99 jeweils eine der Varioscheiben 27, 28 in Eingriff mit dem Sekundärriemen 8 bringt und die jeweils andere Varioscheibe 27, 28 in Leerlaufstellung schaltet, in der der Riemen 8 lastfrei durchläuft. Zum Anfahren des Rasenmähers wird an einer der Varioscheiben 27, 28 entsprechend der gewünschten Fahrtrichtung der Durchmesser erhöht und auf diese Weise reibschlüssig auf den Riemen 8 eingewirkt. Im vorliegenden Ausführungsbeispiel ist die Varioscheibe 28 aktiviert und zieht mit ihrem großen Scheibendurchmesser reibschlüssig an dem Riementrum 18, während die andere Varioscheibe 27 auf kleinen Durchmesser d geschaltet ist und keine Wirkung auf den Sekundärriemen 8 entfaltet.

Die Abtriebsscheibe, welche auf das Rad 2 des Mähers wirkt, ist ebenfalls als Varioscheibe 13 ausgebildet, welche zwischen dem kleinen Durchmesser d und dem großen Durchmesser D stufenlos federbelastet verstellbar ist und welche für die geeignete Riemenspannung im Sekundärriemen 8 sorgt. Ein hoher Umschlingungswinkel der antreibenden Varioscheiben 27, 28 und damit ein kraftvoller Antrieb wird durch eine Führungsrolle 29 erreicht, welche auf der Neutralachse liegt und den Riemen 8 in Richtung der Abtriebsscheibe 13 um die Antriebsvarioscheiben 27, 28 zieht. Die Führungsrolle sorgt auch für die seitliche Riemenführung an der nicht in Eingriff befindlichen Varioscheibe.

Fig. 11 zeigt in einem Schnitt die Schalteinrichtung 99 bei Einwirkung auf die Drehzahl und die Drehrichtung der Antriebsräder des Rasenmähers. Die Schalteinrichtung 99 weist zwei parallel angeordnete Wellen 30, 31 auf, an deren jeweils einem Ende eine Rundriemenscheibe 12 gehalten ist. Die Rundriemenscheiben 12 werden von dem Primärriemen 7 des zweistufigen Riementriebs in entgegengesetzten Richtungen angetrieben. Die Wellen sind in einem Gehäuse 32 mittels Kugellagern 33 drehbar gelagert und laufen in entgegengesetzten Richtungen entsprechend ihren jeweiligen Rundriemenscheiben 12 um. Auf jeder Welle 30, 31 ist eine Varioscheibe 27, 28 angeordnet, von denen jeweils eine entsprechend der Schaltstellung der Schalteinrichtung 99 auf den Sekundärriemen gekuppelt wird. Die Varioscheiben 27, 28 bestehen jeweils aus zwei radialen Scheibenbacken 35, 36, welche an ihrer Innenseite einen V-förmigen Keilraum für den Sekundärriemen 8 ausbilden. Jede Varioscheibe 27, 28 weist eine feststehende Backe 35 auf und eine axial verschiebliche Backe 36, welche unter Verkleinerung des Scheibendurchmessers der jeweiligen Varioscheibe 27, 28 zum freien Ende der jeweiligen Welle 30, 31 hin verschoben werden kann. Zur Vergrößerung des wirksamen Scheibendurchmessers wird die verschiebliche Scheibenbacke 36 an die feststehende Scheibenbacke 35 herangefahren und der V-förmige Riemen mit zunehmendem Heranfahren der verschieblichen Scheibenbacke 36 radial nach außen gedrängt, bis schließlich die dem größten Durchmesser der Scheibe entsprechende strichlierte Darstellung des Treibriemens 8 erreicht ist. Befindet sich eine der Varioscheiben 27, 28 in der aktivierten Stellung, in der sich der Treibriemen 8 in der strichlierten Darstellung mit großem Querschnitt befindet und reibschlüssig von den Scheibenbacken 35, 36 mitgenommen wird, so wird die jeweils andere Varioscheibe 27, 28 in eine geöffnete Stellung gefahren, in der ein Wälzlager 34 zwischen den Scheibenbacken 35, 36 freigegeben wird. Das Wälzlager 34 ist mit seinem Innenring auf der Welle 30, 31 gehalten und bildet mit seinem Außenring die Auflagefläche für den Fuß des V-Riemens 8, wodurch der Riemen lastfrei auf dem Wälzlager 34 laufen kann.

Das axiale Verschieben der variablen Scheibenbacken 36 wird von einer Bedienperson über Steuerhülsen 45, 46 in die Wege geleitet, welche jeweils an den freien Enden der Wellen 30, 31 angeordnet sind. Die Schalteinrichtung 99 sieht eine Servounterstützung der Stellbewegung der Scheibenbacken 36 vor. Dabei ist an jeder Welle 30, 31 eine Gewindezapfen 38 vorgesehen, auf der jeweils eine Steuerscheibe, hier als Steuermutter 39, 44 ausgeführt, drehbeweglich angeordnet ist. An den beiden Wellen sind unterschiedliche Gewinderichtungen der Zapfengewinde vorgesehen. Die innenliegenden Stirnseiten der Steuermuttern 39, 44 beaufschlagen die jeweilige Nabe der beweglichen Scheibenbacken 36. Die Steuerhülsen 45 ,46, welche die Steuermuttern 39 ,44 in sich aufnehmen, weisen in ihrem Inneren eine Kontaktfläche auf, mit der sie bei axialem Druck durch die Bedienperson an die Steuermutter 39 ,44 gedrückt werden und dieser durch Reibung einen bremsenden Impuls verleihen. Die Steuermutter schraubt sich dadurch, dem Gewinde des Gewindezapfens 38 folgend, axial so weit ein, bis sich die Kontaktflächen der Steuermutter und der Steuerhülse 45 wieder lösen. Entsprechend der axialen Verschiebung der Steuermutter 39 wird die an der Innenseite anliegende Nabe 37 der Scheibenbacke 36 verschoben. Die axiale Verschiebung der Steuermutter 39 wird dabei von der Drehung der Welle 30 unterstützt, wodurch die Axialbewegung der Scheibenbacke maßgeblich im Sinn eines Servosystems auch bei geringem axialen Druck auf die Steuerhülse 45 mit der Kraft der Antriebswelle 30 durchgeführt wird.

Für die öffnende Bewegung der Scheibenbacken 36 in die entsprechende Rückstellbewegung der Steuermutter 39, 44 ist jeder Steuermutter 39, 44 ein Rückstellrad 40, 42 zugeordnet. Jedes Rückstellrad 40, 42 ist dabei drehbar auf der jeweiligen Nabe der Scheibenbacke gelagert und weist eine Kontaktfläche 70 auf, welche bei einem Zug auf eine entsprechende Kontaktfläche 49 an der Steuermutter wirkt. In die Rückstellräder, die auf der innenliegenden Stirnseite der Steuermuttern 39, 44 angeordnet sind, greift nach Art eines Hakens ein axialer Mitnehmer 47 der Steuerhülsen 45, 46, wodurch bei Zug an der jeweiligen Steuerhülse 45, 46 das zugeordnete Rückstellrad 40, 42 an die Steuermutter 39, 44 gedrückt wird. Die Kontaktflächen sind im vorliegenden Ausführungsbeispiel konisch ausgebildet, wobei die Steuermuttern 39, 44 doppelkegelstumpfförmig mit zu den Stirnseiten sich verjüngenden Konusflächen 49, 50 ausgebildet sind. Mit der außenliegenden Konusfläche 50 der Steuermuttern 39, 44 korrespondiert eine im Inneren der Steuerhülsen 45, 46 ausgebildete Konusfläche 51. Die Rückstellräder 40, 42 weisen entsprechend eine Konusfläche 70 auf, welche bei axialem Zug in Anlage an die korrespondierende Konusfläche 49 an der Innenseite der jeweiligen Steuermutter 39, 44 gebracht wird. Wird das Rückstellrad 40, 42 durch die Stehülse 45, 46 an den Konus gezogen, folgt die Steuermutter axial der Gewindesteigung, bis der Reibschluß zwischen den Kontaktflächen 70, 49 aufgehoben ist.

Eine rückstellende Ausschraubbewegung der Steuermutter mittels Servowirkung durch die Rückstellräder 40, 42 wird durch schneller als die Wellen 30, 31 laufende Rückstellräder 40, 42 ermöglicht. Dazu ist ein Getriebe vorgesehen, welches die Drehzahl der drehbeweglich auf den jeweiligen Naben 37 der verschieblichen Varioscheibenbacken 36 gelagerten Rückstellräder 40, 42 gegenüber der Wellendrehzahl erhöht. Im Ausführungsbeispiel laufen die Rückstellräder ca. 1,5 mal so schnell wie die Antriebswelle 31, wobei das Übersetzungsgetriebe durch Verzahnungen gebildet ist. Dabei ist eine der mit Wellendrehzahl umlaufenden Naben mit einem verzahnten Radialabschnitt versehen, welcher mit einer Verzahnung 41 geringerer Zähnezahl des auf der anderen Welle gelagerten Rückstellrades 40 kämmt. Dieses bildet seinerseits eine Zahnradpaarung mit einer Verzahnung 43 an dem anderen Rückstellrad 42, welches auf der den Radialabschnitt tragenden Nabe gelagert ist. Die axiale Länge der beiden Verzahnungen ist dabei derart gewählt, daß in jeder axialen Stellung der Scheibenbacken 36 ein Zahneingriff erfolgen kann.

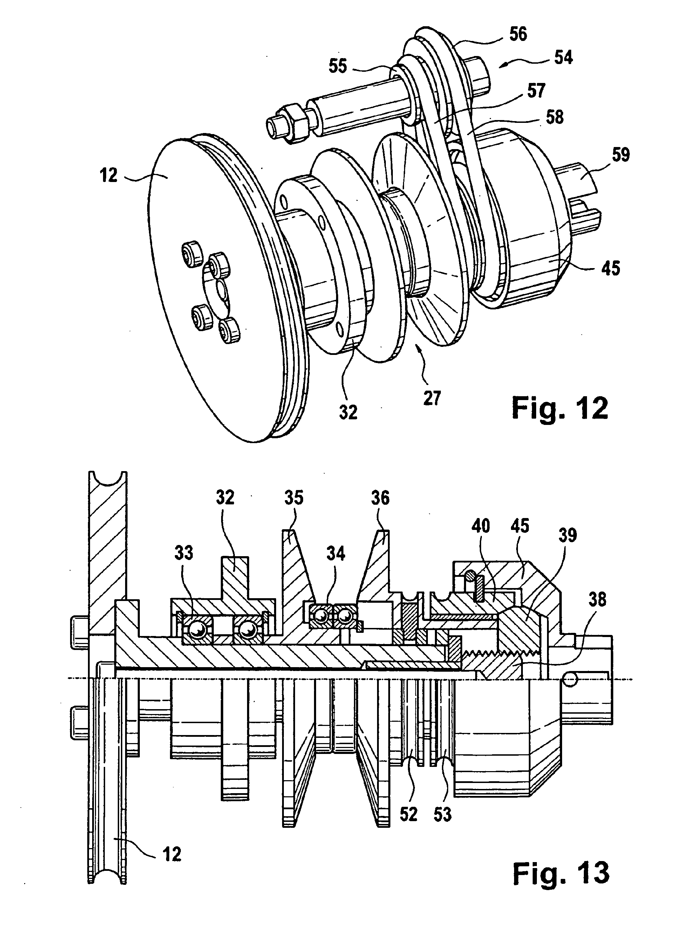

In Fig. 12 und 13 ist eine alternative Ausgestaltung eines Servoantriebs für eine Varioscheibe dargestellt. Dabei wird eine zentrale Welle 31 über eine Rundriemenscheibe 12 bei Aufnahme des Primärriemens angetrieben. Die Welle ist über Kugellager 33 im einem Gehäuse 32 gelagert. Auf der Welle ist drehfest eine Varioscheibe 27 zur Aufnahme des Sekundärriemens gehalten, wobei eine der Rundriemenscheibe 12 zugewandt liegende Scheibenbacke 35 fest an der Welle gehalten ist und die außenliegende Scheibenbacke 36 axial verschieblich angeordnet ist. In zentraler Lage zwischen den Scheibenbacken 35, 36 sind zwei Kugellager 34 vorgesehen, welche eine breite Auflagefläche für den in Leerlaufstellung mitlaufenden Sekundärriemen bereitstellen. Am freien Ende der Welle ist, wie bereits zu Fig. 11 beschrieben, eine Steuermutter 39 auf einem Gewindezapfen angeordnet und in einer Steuerhülse 45 aufgenommen. Die glockenförmige Steuerhülse 45 weist eine Aufnahme 59 für einen Betätigungshebel auf, mit dem die Steuerhülse axial verschoben werden kann. Das Rückstellrad 40, welches mit der innenliegenden Konusfläche der Steuermutter 39 korrespondiert, wird im vorliegenden Ausführungsbeispiel von einem Riemengetriebe 54 angetrieben, um die servounterstützte Rückstellbewegung der Steuermutter zu gewährleisten.

Das Riemengetriebe besteht aus zwei Treibriemen 57, 58, von denen der eine über eine Riemenscheibe 52 an der Antriebswelle und der andere Treibriemen über eine Riemenscheibe 53 läuft, welcher am Umfang des frei drehbaren Rückstellrades 40 ausgebildet ist. Die Getriebeübersetzung mit einer höheren Drehzahl des Rückstellrades 40 gegenüber der Antriebswelle wird durch Riemenscheiben unterschiedlichen Durchmessers für die beiden Treibriemen 57, 58 gewährleistet, wobei der antreibende Riemen 57 über eine kleine Riemenscheibe 55 läuft und somit der längere Treibriemen 58 mit der gleichen Umlaufdrehzahl über die größere Riemenscheibe 56 schneller läuft.

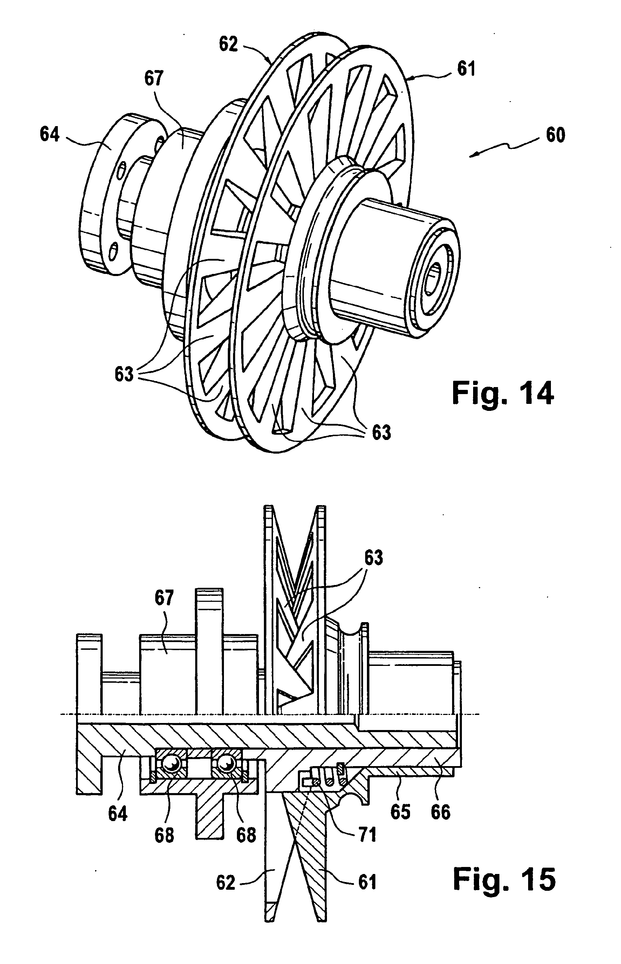

Die Fig. 14 und 15 zeigen eine bevorzugte Ausgestaltung der Varioscheibe 60, welche eine Verwendung herkömmlicher, schmaler Keilriemen ermöglicht. Die Varioscheibe 60 weist Scheibenbacken 61, 62 mit Speichen 63 auf, welche jeweils V-förmig nach innen gerichtet in die Zwischenräume der Speichen 63 der jeweils anderen Scheibenbacke 61, 62 eingreifen. Eine Antriebswelle 64 ist in einem Gehäuse 67 mittels Kugellagern 68 drehbeweglich angeordnet und nimmt die Scheibenbacken 61, 62 mit. Eine Nabe 65 einer axial verschieblichen Scheibenbacke 61 ist auf einer Nabe 66 gehalten, die drehfest auf der Antriebswelle 64 befestigt ist. Die verschiebliche Scheibenbacke wird von dem Servomechanismus nach den Fig 11, 12 und 13 angetrieben, welcher im Ausführungsbeispiel axial auf die Nabe 65 der verschieblichen Scheibenbacke 61 wirkt. Der Antrieb der Scheibenbacke erfolgt bei den Abtriebsvarioscheiben federbelastet durch Anordnung einer Spannfeder 71 zur Gewährleistung der Riemenspannung.

Die Speichenausführung belastet zwar den Riemen mehr, hat aber neben der Verwendbarkeit normaler Keilriemen den Vorteil, daß ein größerer Übersetzungsbereich erreicht werden kann.

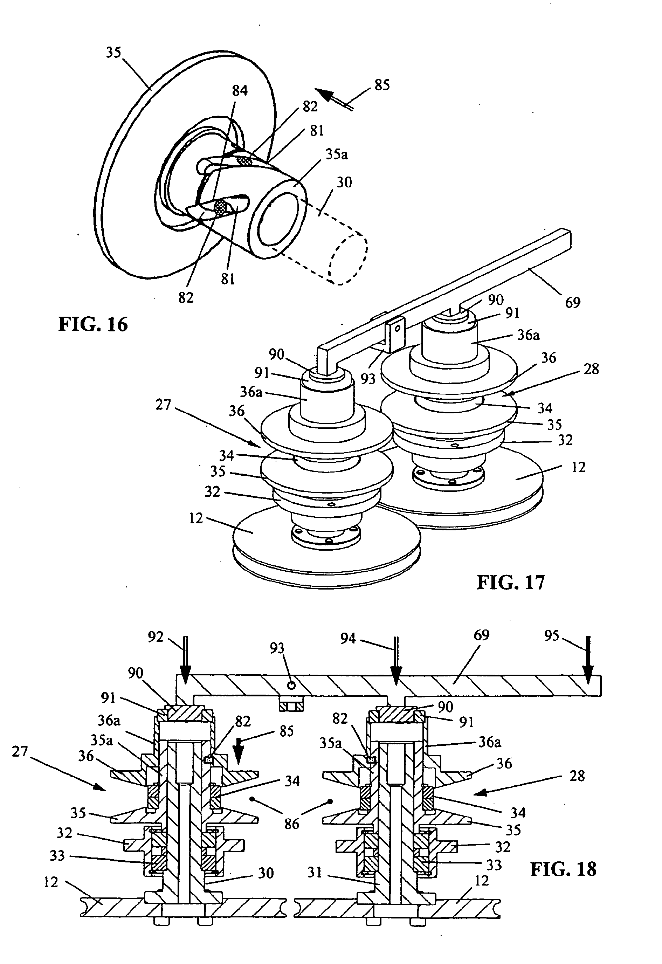

In Weiterbildung der Varioscheiben 27 und 28 kann es zweckmäßig sein, die eine Varioscheibe 27 bzw. 28 bildenden Scheibenbacken 35 und 36 derart miteinander zu koppeln, daß sie über einen begrenzten Drehwinkel gegeneinander drehbar sind. Dies wird im Ausführungsbeispiel nach Fig. 16 durch Schrägnuten bzw. schräge Umfangsschlitze 81 erreicht, die zweckmäßig in der Nabe 35a der von der Welle 30 angetriebenen Scheibenbacke 35 angeordnet sind. Die Nabe 36a der axial verschieblichen Scheibenbacke 36 (Fig. 18) ist auf der Nabe 35a der angetriebenen Scheibenbacke 35 verschieblich und begrenzt drehbar gelagert (Fig. 18), wobei die Nabe 36a der Scheibenbacke 36 nach innen einragende Mitnahmestifte 82 aufweist, die radial in die Umfangsschlitze 81 der angetriebenen Scheibenbacke 35 eingreifen. Bei Drehung der Welle 30 liegen die Mitnahmestifte 82 im jeweiligen Umfangsschlitz 81 drehmomentübertragend an einer Seitenflanke 84 des Schlitzes 81 an, so daß auch die axial verschiebliche Scheibenbacke 36 drehend angetrieben ist. Aufgrund der Schrägstellung des Umfangsschlitzes 81 in der Nabe 35a der Scheibenbacke 35 wird über die Mitnahmestifte 82 auf die - in Figur 16 nicht dargestellte - Scheibenbacke 36 eine zustellende Axialkraft 85 ausgeübt. Diese Axialkraftkomponente wird aus der drehmomentübertragenden Umfangskraft erzeugt und vermindert, - ähnlich einem Servosystem - die vom Benutzer aufzubringende Verstellkraft. Ein in der V-förmigen Nut 86 zwischen den Scheibenbacken 35 und 36 einer Varioscheibe 27, 28 liegender Treibriemen wird reibschlüssig gehalten.

Die erfindungsgemäß zwischen den Naben 35a und 36a vorgesehene, drehmomentübertragende Drehverbindung kann auch durch Keilwellenprofile, Paßfedernuten oder dergleichen Ausbildungen gebildet sein.

Die in den Fig. 17 und 18 gezeigte manuelle Schalteinrichtung 99 ist ohne die Servoeinrichtung ausgeführt, wie sie in den Fig. 11 bis 13 beschrieben ist. Zur Verminderung der über einen Hebel 69 vom Benutzer aufzubringenden Verstellkraft können die Scheibenbacken 35 und 36 aber entsprechend der in Figur 16 dargestellten drehmomentübertragenden Drehverbindung miteinander gekoppelt sein.

Der Aufbau der Schalteinrichtung 99 entspricht im wesentlichen dem in Fig. 11, weshalb für gleiche Teile gleiche Bezugszeichen verwendet sind.

Zwei über Rundriemenscheiben 12 angetriebene Wellen 30 und 31 sind über entsprechende Lager 33 in einem Gehäuse 32 drehbar gehalten. Mit der jeweiligen Welle 30, 31 ist drehfest eine angetriebene Scheibenbacke 35 verbunden. Die angetriebene Scheibenbacke 35 zeigt eine verlängerte Nabe 35a, auf der einerseits ein als Kugellager ausgeführtes Wälzlager 34 montiert ist und andererseits die axial verschiebbare Scheibenbacke 36 - über einen begrenzten Umfangswinkel drehbar - gelagert ist. In der Nabe 35a können entsprechend Figur 16 schräge Umfangsschlitze 81 ausgebildet sein, in die Mitnahmestifte 82 einragen, welche in der Nabe 36a der axial verstellbaren Scheibenbacke 36 gehalten sind. Die Mitnahmestifte 82 sind in Figur 18 schematisch dargestellt.

Ein freier Endabschnitt der Nabe 36a der axial verstellbaren Scheibenbacke 36 ist über ein Druckstück 90 mit dem Hebel 69 verbunden, wobei zwischen dem Druckstück 90 und dem Ende der Nabe 36a ein Lager 91 angeordnet ist. Das Lager 91 gewährleistet die Drehbarkeit der axial verstellbaren Scheibenbacke 36 sowie das Aufbringen einer Axialkraft 92, wie in Fig. 18 dargestellt.

Der Hebel 69 ist an einem gehäusefesten Lager 93 verschwenkbar gehalten, wobei er als Doppelhebel ausgestaltet ist. Auf der einen Seite des Lagers 93 ist das Druckstück 90 zur Betätigung der Varioscheibe 27 angeordnet, während auf der anderen Seite des Lagers 93 ein weiteres Druckstück 90 auf die axial verschiebliche Scheibenbacke 36 der Varioscheibe 28 wirkt. Auch dort ist ein Lager 91 zwischen dem Druckstück 90 und dem freien Ende der Nabe 36a der Scheibenbacke 36 angeordnet, um bei Aufbringen einer Axialkraft 94 eine Drehbarkeit der verstellbaren Scheibenbacke 36 zu gewährleisten. Aufgrund der Anordnung des Lagers 93 zwischen den beiden Varioscheiben 27 und 28 wird bei einem Niederdrücken des Hebels 69 in Pfeilrichtung 95 die verstellbare Varioscheibe 28 aktiviert, während gleichzeitig - aufgrund der Anordnung des Lagers 93 - die axial verschiebliche Scheibenbacke 36 der Varioscheibe 27 zurückgezogen wird. In der Varioscheibe 27 läuft der Riemen im wesentlichen reibungsfrei auf dem inneren Lager 34.

Bei einer Betätigungskraft entgegen Pfeilrichtung 95 wird die axial verschiebliche Scheibenbacke 36 der Varioscheibe 28 entlastet und gleichzeitig die axial verschiebliche Scheibenbacke der Varioscheibe 27 in Richtung der Axialkraft 92 belastet, so daß nun die Varioscheibe 27 aktiv und die Varioscheibe 28 inaktiv ist.

## Patentansprüche

1. Arbeitsgerät (1) mit einem Fahrantrieb, welches über Räder (2) fahrbar ist , insbesondere ein Gartengerät wie einen Rasenmäher o. dgl., mit einem Motor (3), der mindestens ein Werkzeug (5) über eine Antriebswelle (4) antreibt, wobei mindestens ein Rad (2) des Arbeitsgerätes (1) über ein Getriebe von der Antriebswelle (4) antreibbar ist,
**dadurch gekennzeichnet,**
**daß** der Fahrantrieb mehrstufig ausgebildet ist mit einem Primärantrieb (7), welcher zwei Antriebsscheiben (10, 11, 27, 28) antreibt, daß die Antriebsscheiben (10, 11, 27, 28) mit unterschiedlichen Drehrichtungen angetrieben sind, mit einem Sekundärriementrieb (8, 8'),welcher auf eine an das Rad (2) gekoppelte Abtriebsscheibe (13) wirkt, daß die Abtriebsscheibe (13) als im Durchmesser stufenlos gegen eine Spannkraft einstellbare Varioscheibe ausgebildet ist, die eine permanente Riemenspannung im Sekundärriementrieb (8, 8') erzeugt, wobei dem Sekundärriementrieb (8, 8') eine Schalteinrichtung (9, 99) für die Antriebrichtung zugeordnet ist, und mit der Schalteinrichtung (9, 99) alternativ eine der beiden Antriebsscheiben (10, 11, 27, 28) in Wirkverbindung mit einem der Riementrume (18, 18') des Sekundärriementriebes (8, 8') bringbar ist.

2. Arbeitsgerät nach Anspruch 1,
**dadurch gekennzeichnet, daß** die Schalteinrichtung (9) eine Rolleneinrichtung (9) ist, über die der Sekundärriementrieb (8, 8') läuft und welche relativ zu den Antriebsscheiben (10, 11) derart auslenkbar angeordnet ist, daß je nach Schaltstellung alternativ eine der Antriebsscheiben (10, 11) in Eingriff mit einem Riementrum (18,18') des Sekundärriementriebs (8, 8') bringbar ist.

3. Arbeitsgerät nach Anspruch 1 oder 2,
**dadurch gekennzeichnet, daß** die Antriebsscheiben (10, 11) zwischen der auslenkbaren Rolleneinrichtung (9) und der Abtriebscheibe und jeweils benachbart eines
der Riementrums (18, 18') des Sekundärriementriebs (8, 8') angeordnet sind.

4. Arbeitsgerät nach einem der Ansprüche 1 bis 3,
**dadurch gekennzeichnet, daß** die Varioscheibe (13) mit mindestens einem auf die Riemenspannung des Sekundärriementriebs (8, 8') wirkenden Spannelement (71) ausgestattet ist.

5. Arbeitsgerät nach einem der Ansprüche 1 bis 4,
**dadurch gekennzeichnet, daß** die auslenkbare Rolleneinrichtung (9) zwei auf einer Wippe (19, 19') angeordnete Führungsscheiben (22, 23) aufweist, wobei der Drehpunkt (21) der Wippe (19, 19') zwischen den Führungsscheiben (22, 23) liegt.

6. Arbeitsgerät nach Anspruch 5,
**dadurch gekennzeichnet, daß** der Sekundärriementrieb (8, 8') zwei Treibriemen (8, 8') umfaßt, welche auf unabhängig voneinander drehbare Räder (2) beidseitig des Arbeitsgerätes (1) wirken, wobei für jeden Treibriemen (8, 8') unabhängig voneinander in ihren Durchmessern (d, D) einstellbare Abtriebsscheiben (13) vorgesehen sind und den Treibriemen (8, 8') zwei Wippen (19, 19') mit paarweise angeordneten Führungsscheiben (22, 23) zugeordnet sind, wobei eine der Wippen (19') drehbeweglich um einen zwischen den Führungsscheiben (22, 23) liegenden Drehpunkt (21) und die andere Wippe (19) fest angeordnet ist und die Treibriemen (8, 8') jeweils über eine Führungsscheibe der beweglich gelagerten Wippe (19') und eine Führungsscheibe der fest angeordneten Wippe (19) laufen.

7. Arbeitsgerät nach Anspruch 1,
**dadurch gekennzeichnet, daß** die mit unterschiedlichen Drehrichtungen angetriebenen Antriebsscheiben als in ihren Durchmessern (d, D) variabel einstellbare Varioscheiben (27, 28) ausgebildet sind, über welche der Sekundärriementrieb (8, 8') läuft, wobei die Schalteinrichtung (99) für die Antriebsrichtung die Stellmittel für die Veränderung der Scheibendurchmesser (d, D) derart koppelt, daß zur Einwirkung einer Varioscheibe (27, 28) auf den Riementrum (18, 18') ein vergrößerter Scheibendurchmesser eingestellt wird und der Durchmesser der jeweils anderen Varioscheibe (27, 28) in eine Leerlaufstellung mit kleinem Durchmesser (d) gebracht wird, in welcher der Sekundärriemen (8, 8') lastfrei durchläuft.

8. Arbeitsgerät nach Anspruch 7,
**dadurch gekennzeichnet, daß** Scheibenbacken (35, 36) einer Varioscheibe (27, 28) über eine drehmomentübertragende Drehverbindung relativ zueinander verdrehbar sind.

9. Arbeitsgerät nach Anspruch 8,
**dadurch gekennzeichnet, daß** die axial verstellbare Scheibenbacke (36) einer Varioscheibe (27, 28) über schräge Umfangsschlitze (81) und Mitnehmer (82) mit der angetriebenen Scheibenbacke (35) verbunden ist.

10. Arbeitsgerät nach einem der Ansprüche 7 bis 9,
**dadurch gekennzeichnet, daß** die Varioscheiben (27, 28) jeweils zwei in Überdeckung liegende Scheibenbacken (35, 36) aufweisen, welche axial zueinander verschieblich angeordnet sind und einen V-förmigen Zwischenraum zur Aufnahme eines Treibriemens (8, 8') einschließen, wobei zwischen den Scheibenbacken (35, 36) ein frei drehbar gelagerter Auflagering (34) angeordnet ist und die Schaltvorrichtung (99) die sich einander annähernde Stellbewegung der Scheibenbacken (36) der einen Varioscheibe (27, 28) mit der Öffnung der jeweils anderen Varioscheibe (27, 28) koppelt.

11. Arbeitsgerät nach Anspruch 10,
**dadurch gekennzeichnet, daß** die Schalteinrichtung (99) umfaßt
- zwei parallel liegende Wellen (30, 31), auf denen jeweils eine für den Primärriemen (7) vorgesehene Antriebsscheibe (12) und eine Varioscheibe (27, 28) drehfest angeordnet ist, wobei eine der Antriebsscheibe (12) zugewandt liegende Scheibenbacke (35) fest und die außen liegende Scheibenbacke (36) axial verschieblich ist,
- an jeder Welle (30, 31) ein Steuergewinde (38) mit unterschiedlichen Gewinderichtungen, auf dem jeweils eine Steuerscheibe (39, 44) mit Gewindeeingriff drehbeweglich angeordnet ist, an welcher sich die axial verschiebliche Scheibenbacke (36) der Varioscheibe (27, 28) axial abstützt,
- pro Welle (30, 31) ein drehbar auf einer Nabe (37) der verschieblichen Scheibenbacke (36) gelagertes Rückstellrad (40, 42), welches von einer der Wellen (31) mittels eines Getriebes (41, 43, 54) mit erhöhter Drehzahl gegenüber der Welle (31) angetrieben wird und welches einen Konusmantel (70) aufweist, welcher mit einer zugewandt liegenden Fläche (49) der Steuerscheibe (39,44) über axiales Spiel in reibschlüssige Verbindung bringbar ist,
- pro Welle (30, 31) eine Steuerhülse (45, 46), welche mit einer in ihrem Inneren ausgebildeten Kontaktfläche (51) mit einem außen liegenden Flächenabschnitt (50) der Steuerscheibe (39, 44) über axiales Spiel in reibschlüssige Verbindung bringbar ist und in axialer Wirkverbindung mit dem Rückstellrad (42) steht.

12. Arbeitsgerät nach Anspruch 11,
**dadurch gekennzeichnet, daß** die Kontaktflächen (49, 50, 51, 70) für reibschlüssigen Kontakt zwischen der Steuerscheibe (39, 44) und außen liegend der Steuerhülse (45, 46), innen liegend dem Rückstellrad (40, 42), konisch ausgebildet sind.

13. Arbeitsgerät nach Anspruch 11 oder 12,
**dadurch gekennzeichnet, daß** das Steuergewinde durch einen Gewindezapfen (38) der jeweiligen Welle (30, 31) gebildet und die Steuerscheibe (39, 44) als auf dem Gewindezapfen (38) schraubbewegliche Mutter (39, 44) vorgesehen ist.

14. Arbeitsgerät nach einem der Ansprüche 11 bis 13,
**dadurch gekennzeichnet, daß** ein Riemengetriebe (54) zwischen Welle (31) und Rückstellrad (40) vorgesehen ist.

15. Arbeitsgerät nach einem der Ansprüche 1 bis 14,
**dadurch gekennzeichnet, daß** der Primärantrieb (7) als Riementrieb (7) ausgebildet ist.

16. Arbeitsgerät nach einem der Ansprüche 1 bis 15,
**dadurch gekennzeichnet, daß** der Primärantrieb (7) als Zahnradgetriebe ausgebildet ist, wobei vorteilhaft ein Zahnrad des Primärantriebs (7) mit einer Riemenscheibe kombiniert ist.

## Claims

1. A work device (1) with a travelling drive which can be driven by wheels (2), in particular a gardening device such as a lawn mower or similar, having an engine (3) which drives at least one tool (5) via a drive shaft (4), it being possible for at least one wheel (2) of the work device (1) to be driven via a gear by the drive shaft (4),
**characterised in that**
the travelling drive is designed as a multi-speed drive with a primary drive (7) which drives two drive wheels (10, 11, 27, 28), the drive wheels (10, 11, 27, 28) are driven in different directions of rotation, with a secondary belt drive (8, 8') which acts on a driven wheel (13) coupled to the wheel (2), the driven wheel (13) is designed as a vario-wheel with a diameter which can be infinitely varied against a tension force and which generates a permanent belt tension in the secondary belt drive (8, 8'), there being assigned to the secondary belt drive (8, 8') a switching device (9, 99) for the drive direction and it being alternatively possible using the switching device (9, 99) to bring one of the two drive wheels (10, 11, 27, 28) into an active connection with one of the belt sides (18, 18') of the secondary belt drive (8, 8').

2. A work device in accordance with claim 1,
**characterised in that**
the switching device (9) is a roller device (9) over which the secondary belt drive (8, 8') runs and which is positioned in such a manner relative to the drive wheels (10, 11) that it is able to deflect such that it is alternatively possible, depending on the switching position, to engage one of the drive wheels (10, 11) with a belt side (18, 18') of the secondary belt drive (8, 8').

3. A work device in accordance with claim 1 or 2,
**characterised in that**
the drive wheels (10, 11) are positioned between the deflectable roller device (9) and the driven wheel, each adjacent to one of the belt sides (18, 18') of the secondary belt drive (8,, 8').

4. A work device in accordance with one of claims 1 to 3,
**characterised in that**
the vario-wheel (13) is fitted with at least one tensioning element (71) which acts on the belt tension of the secondary belt drive (8, 8').

5. A work device in accordance with one of claims 1 to 4,
**characterised in that**
the deflectable roller device (9) has two guide wheels (22, 23) positioned on a rocker (19, 19'), the pivot point (21) of the rocker (19, 19') lying between the guide wheels (22, 23).

6. A work device in accordance with claim 5,
**characterised in that**
the secondary belt drive (8, 8') comprises two drive belts (8, 8') which act on wheels (2) positioned on either side of the work device (1) which can be rotated independently of one another, there being provided for each drive belt (8, 8') driven wheels (13) with independently adjustable diameters (d, D), and there being assigned to said drive belts (8, 8') two rockers (19, 19') with guide wheels (22, 23) arranged in pairs, one of the rockers (19') being positioned such that it is able to rotate about a pivot point (21) lying between the guide wheels (22, 23) and the other rocker (19) being fixed, and the drive belts (8, 8') running on a guide wheel on the movable rocker (19') and on a guide wheel on the fixed rocker (19).

7. A work device in accordance with claim 1,
**characterised in that**
the driving wheels which are driven in different directions of rotation are designed as vario-wheels (27, 28) with variably adjustable diameters (d, D) on which the secondary belt drive (8,8') runs, the switching device (99) for the drive direction coupling the adjusting means for changing the wheel diameter (d, D) in such a manner that to make one vario-wheel (27, 28) act on the belt side (18, 18') an enlarged wheel diameter is set, while the diameter of the other vario-wheel (27, 28) is moved to an idle position with a small diameter (d, D) in which the secondary belt (8, 8') runs with no load.

8. A work device in accordance with claim 7,
**characterised in that**
wheel cheeks (35, 36) of a vario-wheel (27, 28) can be rotated in relation to one another by means of a torque-transmitting revolving joint.

9. A work device in accordance with claim 8,
**characterised in that**
the axially adjustable wheel cheek (36) of a vario-wheel (27, 28) is connected via angled circumferential slits (81) and drivers (82) to the driven wheel cheek (35).

10. A work device in accordance with one of claims 7 to 9,
**characterised in that**
the vario-wheels (27, 28) each have two overlapping wheel cheeks (35, 36) which are positioned such that they can be moved axially in relation to one another and include a V-shaped space for receiving a drive belt (8, 8'), there being positioned between the wheel cheeks (35, 36) a freely rotating bearing ring, and the switching device (99) coupling the adjusting movement bringing the wheel cheeks (36) of one vario-wheel (27, 28) closer together with the opening of the other vario-wheel (27, 28).

11. A work device in accordance with claim 10,
**characterised in that**
the switching device (99) comprises
- two parallel shafts (30, 31) on which are positioned in such a manner that they are unable to rotate a drive wheel (12) provided for the primary belt (7) and a vario-wheel (27, 28), a wheel cheek (35) located facing the drive wheel (12) being fixed and the outer wheel check (36) being movable axially,
- on each shaft (30, 31) a control thread (38) with different thread directions on which is positioned in such a manner that it is able to rotate a control wheel (39, 44) with thread engagement on which the axially movable wheel cheeks (36) of the vario-wheel (27, 28) rest axially,
- for each shaft (30, 31) a restoring wheel (40, 42) mounted on a hub (37) of the movable wheel check (36) which is driven by one of the shafts (31) by means of a gear (41, 43, 54) at a higher speed that the shaft (31) and which has a conical jacket (70) which can be brought into a friction-tight connection with a facing face (49) of the control wheel (39, 44) via axial play,
- for each shaft (30, 31) a control sleeve (45, 46) an inner contact face (51) of which can be brought into a friction-tight connection with an outer face section (50) of the control wheel (39, 44) via axial play, and which is stands in an axial active connection with the restoring wheel (42).

12. A work device in accordance with claim 11,
**characterised in that**
the contact faces (49, 50, 51, 70) are designed conically for friction-tight contact between the control wheel (39, 44) and the control sleeve (45, 46) on the outside and the restoring wheel (40, 42) on the inside.

13. A work device in accordance with claim 11 or 12,
**characterised in that**
the control thread takes the form of a threaded pin (38) on the shaft (30, 31) and the control wheel (39, 44) is provided in the form of a nut (39, 44) which can be screwed up and down the threaded pin (38).

14. A work device in accordance with one of claims 11 to 13,
**characterised in that**
a belt drive (54) is provided between the shaft (32) and the restoring wheel (40).

15. A work device in accordance with one of claims 1 to 14,
**characterised in that**
the primary drive (7) is designed as a belt drive (7).

16. A work device in accordance with one of claims 1 to 15,
**characterised in that**
the primary drive (7) is designed as a toothed gear, one gearwheel of the primary drive (7) advantageously combining with a pulley.

## Revendications

1. Outil de travail (1) avec un système d'entraînement qui peut être déplacé à l'aide de roues (2), en particulier un outil de jardinage tel qu'une tondeuse à gazon ou un autre du même genre, avec un moteur (3) qui entraîne au moins un outil (5) au moyen d'un arbre de transmission (4), au moins une roue (2) de l'outil de travail (1) pouvant être entraîné par un engrenage de l'arbre de transmission (4), **caractérisé en ce que** le système d'entraînement est conçu à plusieurs paliers avec un entraînement primaire (7) qui entraîne deux poulies de transmission (10, 11, 27, 28), **en ce que** les poulies de transmission (10, 11, 27, 28) sont entraînées dans différents sens de rotation, avec une transmission secondaire à courroie (8, 8') qui agit sur une poulie de sortie (13) couplée à la roue (2), **en ce que** la poulie de sortie (13) est conçue comme une variopoulie à diamètre réglable en continu contre une force de serrage qui génère une tension de courroie permanente dans la transmission secondaire à courroie (8, 8'), un mécanisme de couplage pour le sens d'entraînement (9, 99) étant associé à la transmission secondaire à courroie (8, 8') et, à l'aide du mécanisme de couplage (9, 99), l'une des deux poulies de transmission (10, 11, 27, 28) pouvant être mise en communication active avec l'un des brins de courroie (18, 18') de la transmission secondaire à courroie (8, 8') de manière alternative.

2. Outil de travail selon la revendication 1, **caractérisé en ce que** le mécanisme de couplage (9) est un dispositif à rouleaux (9) sur lequel circule la transmission secondaire à courroie (8, 8') et qui est disposé par rapport aux poulies de transmission (10, 11) pour pouvoir être dévié de manière à ce que, en fonction de la position de couplage, l'une des poulies de transmission (10, 11) puisse être mise en prise avec un brin de courroie (18, 18') de la transmission secondaire à courroie (8, 8') de manière alternative.

3. Outil de travail selon la revendication 1 ou 2, **caractérisé en ce que** les poulies de transmission (10, 11) sont disposées entre le dispositif à rouleaux (9) pouvant être dévié et la poulie de sortie et que chacune est adjacente à un brin de courroie (18, 18') de la transmission secondaire à courroie (8, 8').

4. Outil de travail selon l'une quelconque des revendications 1 à 3, **caractérisé en ce que** la variopoulie (13) est équipée d'au moins un élément de tension (71) agissant sur la tension de courroie de la transmission secondaire à courroie (8, 8').

5. Outil de travail selon l'une quelconque des revendications 1 à 4, **caractérisé en ce que** le dispositif à rouleaux (9) pouvant être dévié comporte deux poulies de guidage (22, 23) disposées sur une bascule (19, 19'), le point de rotation (21) de la bascule (19, 19') se trouvant entre les poulies de guidage (22, 23).

6. Outil de travail selon la revendication 5, **caractérisé en ce que** la transmission secondaire à courroie (8, 8') comporte deux courroies d'entraînement (8, 8') qui agissent sur des roues (2) qui tournent indépendamment les unes des autres de chaque côté de l'outil de travail (1), des poulies de sortie (13) avec des diamètres (d, D) réglables indépendamment les uns des autres étant prévues pour chaque courroie d'entraînement (8, 8') et deux bascules (19, 19') avec des poulies de guidage (22, 23) disposées par paires étant associées aux courroies d'entraînement (8, 8'), l'une des bascules (19') étant mobile en rotation autour d'un point de rotation (21) se trouvant entre les poulies de guidage (22, 23) et l'autre bascule (19) étant positionnée de manière fixe et les courroies d'entraînement (8, 8') circulant chacune sur une poulie de guidage de la bascule mobile (19') et une poulie de guidage de la bascule fixe (19).

7. Outil de travail selon la revendication 1, **caractérisé en ce que** les poulies de transmission (10, 11, 27, 28) entraînées dans différents sens de rotation sont conçues comme des variopoulies (27, 28) à diamètres (d, D) réglables de manière variable sur lesquelles circule la transmission secondaire à courroie (8, 8'), le mécanisme de couplage (99) pour le sens d'entraînement couplant les moyens de réglage pour la variation des diamètres des poulies (d, D) de telle manière qu'un diamètre de poulie plus grand est réglé pour l'action d'une variopoulie (27, 28) sur le brin de courroie (18, 18') et que le diamètre de l'autre variopoulie (27, 28) est amené dans une position de marche à vide avec un petit diamètre (d) dans laquelle la courroie secondaire (8, 8') circule sans charge.

8. Outil de travail selon la revendication 7, **caractérisé en ce que** des mâchoires de poulies (35, 36) d'une variopoulie (27, 28) peuvent tourner l'une par rapport à l'autre par l'intermédiaire d'un raccord tournant qui transmet le couple.

9. Outil de travail selon la revendication 8, **caractérisé en ce que** la mâchoire de poulie (36) réglable axialement d'une variopoulie (27, 28) est reliée à la mâchoire de poulie entraînée (35) par l'intermédiaire d'une rainure périphérique oblique (81) et d'un tenon de guidage (82).

10. Outil de travail selon l'une quelconque des revendications 7 à 9, **caractérisé en ce que** les variopoulies (27, 28) comportent chacune deux mâchoires de poulies (35, 36) se chevauchant qui sont disposées de manière à se déplacer axialement l'une par rapport à l'autre et qui incluent un espace intermédiaire en forme de V pour la réception d'une courroie d'entraînement (8, 8'), une bague d'appui (34) positionnée de manière à tourner librement étant disposée entre les mâchoires de poulies (35, 36) et le mécanisme de couplage (99) couplant le mouvement de réglage pour le rapprochement des mâchoires de poulies (36) d'une variopoulie (27, 28) avec l'ouverture de l'autre variopoulie (27, 28).

11. Outil de travail selon la revendication 10, **caractérisé en ce que** le mécanisme de couplage (99) comprend
- deux arbres (30, 31) disposés en parallèle sur lesquels une poulie d'entraînement (12) prévue pour la courroie primaire (7) et une variopoulie (27, 28) sont montées de manière à résister à la rotation, une mâchoire de poulie (35) dirigée vers la poulie d'entraînement (12) étant fixe et la mâchoire de poulie (36) montée à l'extérieur étant déplaçable axialement,
- sur chaque arbre (30, 31), un filetage de commande (38) avec des sens de filetage différents sur lequel une poulie de commande (39, 44) avec un engrènement par filetage est montée de manière mobile en rotation, sur laquelle la mâchoire de poulie mobile axialement (36) de la variopoulie (27, 28) s'appuie axialement,
- pour chaque arbre (30, 31), une roue de rappel (40, 42) positionnée de manière rotative sur un moyeu (37) de la mâchoire de poulie mobile (36) qui est entraînée par l'un des arbres (31) au moyen d'une transmission (41, 43, 54) avec une vitesse de rotation plus élevée par rapport à l'arbre (31) et qui est munie d'une enveloppe conique (70) qui peut être assemblée par friction au moyen d'un jeu axial avec une face (49) de la poulie de commande (39, 44) dirigée vers elle,
- pour chaque arbre (30, 31), une douille de commande (45, 46) qui peut être assemblée par friction au moyen d'un jeu axial avec une face de contact (51) formée à l'intérieur de la douille de commande avec un segment de surface (50) de la poulie de commande (39, 44) se trouvant à l'extérieur et qui est en communication axiale active avec la roue de rappel (42).

12. Outil de travail selon la revendication 11, **caractérisé en ce que** les faces de contact (49, 50, 51, 70), pour le contact par friction entre la poulie de commande (39, 44) et la douille de commande (45, 46) à l'extérieur, et la roue de rappel (40, 42) à l'intérieur sont coniques.

13. Outil de travail selon la revendication 11 ou 12, **caractérisé en ce que** le filetage de commande est constitué par une goupille filetée (38) de l'arbre correspondant (30, 31) et la poulie de commande (39, 44) est prévue comme un écrou (39, 44) pouvant être vissé sur la goupille filetée (38).

14. Outil de travail selon l'une quelconque des revendications 11 à 13, **caractérisé en ce qu'**il est prévu une transmission à courroie (54) entre l'arbre (31) et la roue de rappel (40).

15. Outil de travail selon l'une quelconque des revendications 1 à 14, **caractérisé en ce que** l'entraînement primaire (7) est conçu comme une commande à courroie (7).

16. Outil de travail selon l'une quelconque des revendications 1 à 15, **caractérisé en ce que** l'entraînement primaire (7) est conçu comme une transmission par engrenages, une roue dentée de l'entraînement primaire (7) étant, de préférence, combinée avec une poulie à courroie.
